**Europäisches Patentamt**

**European Patent Office**

**Office européen des brevets**

(19)

(11) Numéro de publication: **0 032 071**
**B2**

(12) **NOUVEAU FASCICULE DE BREVET EUROPEEN**

(45) Date de publication du nouveau fascicule du brevet:
13.05.87

(51) Int. Cl.⁴: **F 16 D 66/02**

(21) Numéro de dépôt: **80401714.3**

(22) Date de dépôt: **01.12.80**

(54) **Dispositif de témoin d'usure pour plaquettes de freins à disques.**

(30) Priorité: **28.12.79 FR 7931999**

(43) Date de publication de la demande:
**15.07.81 Bulletin 81/28**

(45) Mention de la délivrance du brevet:
**30.05.84 Bulletin 84/22**

(45) Mention de la décision concernant l'opposition:
**13.05.87 Bulletin 87/20**

(84) Etats contractants désignés:
**BE DE GB IT LU NL**

(56) Documents cités:
**DE - A - 1 680 104**
**FR - A - 2 138 897**
**FR - A - 2 406 128**

(73) Titulaire: **ABEX EQUIPEMENT S.A., 58, rue Juliette-Adam, F-91190 Gif-sur-Yvette (FR)**

(72) Inventeur: **Jouvenelle, Alain J., 13, rue de Beauséjour, F-60400 Noyon (FR)**
Inventeur: **Kazuro, Jean M., 2, Square de Compiègne, F-60400 Noyon (FR)**
Inventeur: **Pomes, Guy R., Les Effaloises Route de Longueil Annel, F-60150 Thourotte (FR)**

(74) Mandataire: **Clanet, Denis et al, Cabinet Beau de Loménie 55, rue d'Amsterdam, F-75008 Paris (FR)**

EP 0 032 071 B2

ACTORUM AG

## Description

La présente invention a pour objet un dispositif de témoin d'usure pour plaquettes de freins à disques.

Certains dispositifs de freins à disques comportent des plaquettes de freins ou garnitures de friction qui sont équipées de témoins d'usure isolés de la masse du véhicule, et qui, par contact avec le disque relié à la masse, provoquent l'allumage d'un voyant lumineux sur le tableau de bord du véhicule.

Pour procéder au montage d'un témoin d'usure pour une plaquette de frein, il est nécessaire de prévoir certains aménagements sur celle-ci.

Suivant un mode de réalisation connu, on procède à l'usinage d'un trou dans la garniture de friction, destiné à recevoir un fil conducteur de l'électricité qui est maintenu par collage.

Suivant un autre mode de réalisation également connu, on procède au découpage d'un trou dans l'armature métallique afin de permettre la mise en place d'un témoin d'usure constitué d'un manchon isolant dans lequel est disposée une fiche conductrice.

Par ailleurs, il est également connu, par le brevet FR-A 2 406 128 de la demanderesse, de remplacer l'organe de support métallique des plaquettes par un organe de support en matière organique non conducteur de l'électricité. Cet organe de support en matière organique permet l'aménagement direct, par moulage, de formes ou de cavités diverses susceptibles de recevoir les types classiques de témoins d'usure ou des variantes de ceux-ci.

Le brevet DE-A 1 680 104 concerne également des plaquettes de freins comportant un organe de support isolant et un témoin d'usure qui est noyé dans la zone limite entre l'organe de support et la garniture de friction.

Conformément à la présente invention, le témoin d'usure constitué par une fiche conductrice de l'électricité reliée à un circuit électrique de signalisation est montée dans l'organe de support en matière isolante au-delà du reste de la surface de liaison entre l'organe de support et la garniture de friction, la matière de l'organe de support s'étendant, au droit de la fiche, au-delà du reste de la surface de liaison et au-delà de ladite fiche.

La disposition permet un montage dans un organe de support isolant d'un organe conducteur de l'électricité et ceci au-delà du reste de la surface de liaison entre l'organe de support et la garniture de friction afin de provoquer l'allumage du voyant lumineux et de prévenir le conducteur avant que la garniture de friction soit totalement usée.

Par ailleurs le dispositif suivant l'invention permet une simplification de la fabrication des plaquettes destinées à recevoir un témoin d'usure et une réduction du prix de revient.

D'autres caractéristiques et avantages de l'invention ressortiront plus clairement de la description qui va suivre, donnée uniquement à titre indicatif ainsi que des dessins annexés sur lesquels:

La figure 1 est une vue en élévation d'une plaquette de frein comportant un mode de réalisation du témoin d'usure;

la figure 2 est une vue en coupe suivant la ligne II–II de la figure 1;

la figure 3 est une vue en élévation d'une plaquette de frein comportant un autre mode de réalisation du témoin d'usure;

la figure 4 est une vue en coupe suivant la ligne IV–IV de la figure 3; et

la figure 5 est une vue de dessus de la plaquette représentée à la figure 3.

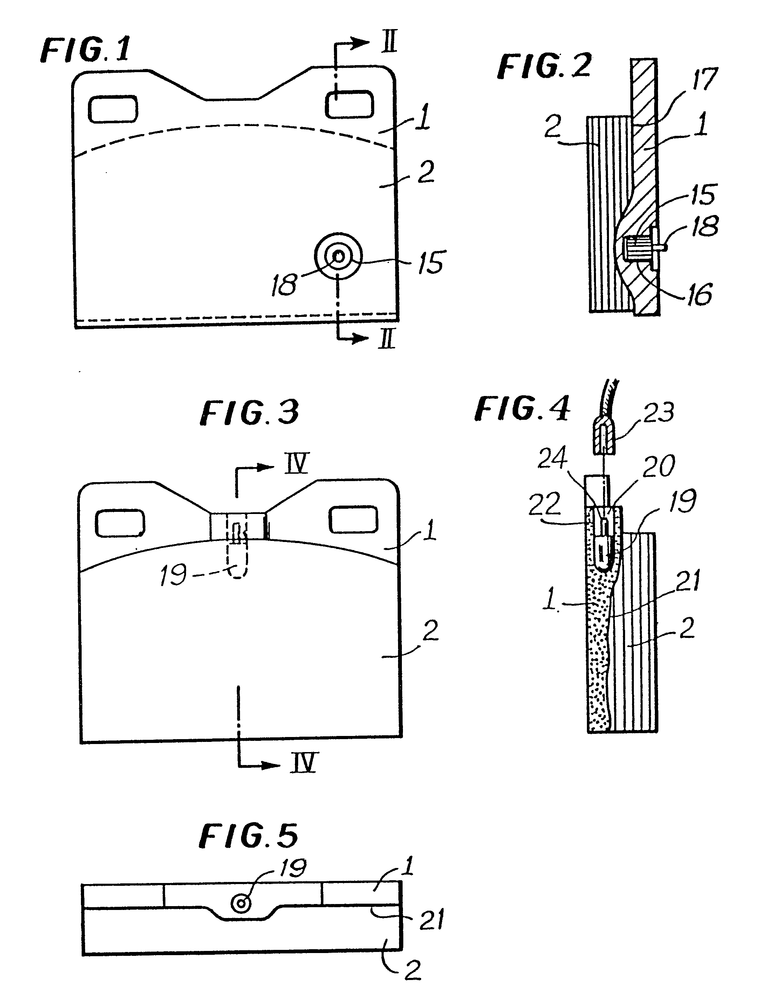

Aux figures 1 et 2, on a représenté une plaquette de frain à disque qui est constituée d'un organe de support 1 en matière organique non conductrice de l'électricité sur lequel est fixée, au cours d'une opération de compression, une garniture de friction 2, ainsi qu'il est décrit dans le brevet français FR-A 2 406 128 de la demanderesse.

Le témoin d'usure est constitué d'une fiche 15 conductrice de l'électricité, emmanchée à force dans un logement 16 ménagé lors du moulage dans l'organe de support 1. La réalisation du logement 16 provoque au moulage un déplacement de la matière constituant l'organe de support au-delà du plan ou surface 17 de liaison entre l'organe de support et la garniture de friction, de telle sorte que la fiche conductrice 15 s'étend au-delà du reste de la surface de liaison 17 et qu'elle est susceptible de venir en contact avec le disque de frein lors de l'usure de la garniture de friction.

La fiche 15 présente une broche 18 par laquelle elle est susceptible d'être reliée par un organe conducteur à un circuit de signalisation.

Aux figures 3, 4 et 5 on a représenté une variante de réalisation du mode de réalisation précédent, dans lequel une fiche de contact 19 en matière conductrice de l'électricité est surmoulée dans l'organe de support 1 en matière organique.

La fiche 19 est disposée verticalement dans la partie médiane supérieure de l'organe de support et s'étend au-delà du reste de la surface 21 de liaison entre l'organe de support et la garniture de friction.

Au-dessus de la fiche est ménagé un logement 22 pour l'introduction d'une fiche de raccordement 23 qui est susceptible d'être engagée sur une broche 24 de la fiche 19, ladite fiche de raccordement étant reliée par un organe conducteur à un circuit de signalisation.

Comme connu, le circuit de signalisation comporte notamment un voyant lumineux disposé sur le tableau de bord du véhicule et lorsque la garniture de friction est usée, la fiche conductrice vien au contact avec le disque et ferme le circuit de signalisation.

## Revendication

Dispositif de témoin d'usure pour plaquettes de freins à disques formées d'un organe de support (1) en matière organique non conductrice de l'électricité et d'une garniture de friction (2) fixée sur ledit organe de support suivant une surface de liaison (17, 21), ledit témoin d'usure étant constitué par un organe conducteur de l'électricité (15, 19) relié à un circuit électrique de signalisation, caractérisé en ce que le témoin d'usure est constitué d'une fiche conductrice (15, 19) reçue dans ledit organe de support (1), la matière de ce dernier s'étendant, au droit de ladite fiche, au-delà du reste de la surface (17, 21) de liaison entre l'organe de support et la garniture de friction et au-delà de ladite fiche, et la fiche conductrice s'étendant également au-delà du reste de la surface (15, 21) de liaison.

**Patentanspruch**

Vorrichtung zur Abnutzungsanzeige für Bremsplatten von Scheibenbremsen, wobei die Bremsplatten aus einem Tragelement (1) aus organischem elektrisch nichtleitendem Material und einem auf dem genannten Tragelement entlang einer Verbindungsfläche (17, 21) befestigten Reibbelag (2) gebildet sind, wobei der genannte Abnutzungsanzeiger aus einem elektrisch leitenden Teil (15, 19) besteht, das mit einem elektrischen Anzeigekreis verbunden ist, dadurch gekennzeichnet, dass der Abnutzungsanzeiger aus einem leitenden, in dem genannten Tragelement (1) eingelassenen Stift besteht, wobei sich das Material des Tragelements im Bereich des Stiftes über den Rest der Verbindungsfläche (17, 21) hinaus zwischen dem Tragelement und dem Reibbelag und über den genannten Stift hinaus erstreckt und wobei der leitende Stift sich ebenfalls über den Rest der Verbindungsfläche (15, 21) hinaus erstreckt.

**Claim**

Wear indicator device for disc brake pads comprising a supporting member (1) made of an organic, electrically non-conducting material and a friction pad (2) connected to said supporting member along a connecting surface (17, 21), said wear indicator comprising an electrically conducting member (15, 19) connected to an electrical signalling circuit, characterized in that the wear indicator comprises a conducting pin (15, 19) received in said supporting member (1), the material of the latter extending, in registry with said pin, beyond the rest of the connecting surface (17, 21) between the supporting member and the friction pad and beyond said pin, and the conducting pin also extending beyond the rest of the connecting surface (15, 21).

# FIG.1

# FIG.2

# FIG.3

# FIG.4

# FIG.5